Europäisches Patentamt

European Patent Office

Office européen des brevets

(11) Publication number: **0 196 199**
A2

# (12) EUROPEAN PATENT APPLICATION

(21) Application number: 86302073.1

(51) Int. Cl.⁴: **E 21 B 43/25**, E 21 B 43/22

(22) Date of filing: 20.03.86

(30) Priority: 25.03.85 US 715791

(71) Applicant: **PFIZER INC., 235 East 42nd Street, New York, N.Y. 10017 (US)**

(43) Date of publication of application: 01.10.86
**Bulletin 86/40**

(72) Inventor: **Judson, Christopher Philips, 1055 Long Cove Road, Gales Ferry Connecticut (US)**

(84) Designated Contracting States: **BE DE FR GB IT NL**

(74) Representative: **Moore, James William, Dr., Pfizer Limited Ramsgate Road, Sandwich Kent CT13 9NJ (GB)**

(54) Stabilizing polysaccharide solutions for tertiary oil recovery at elevated temperature.

(57) A method of tertiary oil recovery from petroleum-containing formations at elevated temperature comprises injecting a substantially oxygen-free aqueous saline solution of water-soluble polysaccharide bipolymer treated at pH of at least 5 by the addition of an alkali metal salt of a reducing sulfur oxo acid selected from sulfurous acid and thiosulfuric acid as sole viscosity stabilizer.

EP 0 196 199 A2

PC 6570A

## STABILIZING POLYSACCHARIDE SOLUTIONS FOR TERTIARY OIL RECOVERY AT ELEVATED TEMPERATURE

This invention concerns a method of stabilizing polysaccharide biopolymer solutions employed in tertiary oil recovery at elevated temperature.

Tertiary oil recovery is commonly used today to recover the oil which remains in a subterranean petroleum-containing formation after primary and secondary recovery techniques have been exhaused.

One approach to tertiary oil recovery is polymer flooding. In this approach, certain organic polymers are added to at least a portion of the fluid injected into the formation to thicken the fluid and thereby improve the mobility of the entrapped oil as the fluid is driven from the injection site to the production well. Among these polymers are the xanthan gums, hydrophilic polysaccharides produced by fermentation using bacteria of the genus <u>Xanthomonas</u>. The biopolymer may be used in the form of the fermentation broth itself, as exemplified in U.S. Patent 4,119,546, or in isolated and reconstituted form, as disclosed in U.S. Patent 3,305,016. Xanthan gums are particularly desirable for polymer flooding since they are good displacing agents; give useful viscosities at low concentrations (5 to 90 centipoises at 100 to 3,000 ppm); are not lost by extensive adsorption on the porous rock formations; are relatively insensitive to salts, not precipitating or losing viscosity under normal conditions; and are reasonably shear stable and viscosity stable over a wide pH range. Other polysaccharide biopolymers include such as those derived from the genus Sclerotium and from the genus Alcaligenes, the use of which in enhanced oil recovery is described, for example, in U.S. Patent 3,372,749 and British Patent Specification 2,082,189, respectively.

While xanthan polysaccharide biopolymer solutions have proven to be effective in tertiary oil recovery, one problem which has arisen with their use is in oil reservoirs at elevated temperatures of about 60-150°C. There, the polymer solution tends to be unstable with significant loss in viscosity in a few days, particularly in low-saline (500 ppm or less total dissolved solids) waters.

Solutions to this problem have been suggested. In U.S. Patent 4,141,842, for example, the polymer solution includes a $C_3$ to $C_5$ aliphatic alcohol to stabilize the polysaccharide. In U.S. Patent 4,218,327, the stability of the solution viscosity is improved by initially deoxygenating the dilution water with agents such as alkali metal sulfites, bisulfites and dithionites, and then adding a sulfur-containing antioxidant, a readily oxidizable water-soluble alcohol or glycol, and the polymer. And in U.K. Patent Application GB 2000823A, aqueous solutions of polymeric mobility control agents, including polysaccharides, are stabilized with an alkylene polyamine, alkanolamine or alicyclic polyamine; the solutions may also contain an oxygen scavenger such as sulfite or dithionite.

MacWilliams et al, Polymer Science and Technology, Volume 2, pages 121-126, (1973), discloses studies on the high temperature stability of aqueous saline xanthan solutions, including those containing sodium hydrosulfite as a deoxygenator, but the effect of such addition on long term stability of the xanthan is not clear.

The need still exists for, and it is the primary objective of the present invention to provide, a simple, economical and effective means of stabilizing polysaccharide biopolymer flood control solutions employed at elevated temperature.

U.S. Patents 2,960,486 and 3,753,939 disclose the stabilization of aqueous polyacrylamide at elevated temperature by addition of sulfite and thiosulfate, respectively. The use of alkali metal hydrosulfite for the instant purpose is disclosed in European Patent Application Publication Number 106,666 published April 25th 1984

It has now been found that excellent high-temperature stability of aqueous polysaccharide solutions intended for tertiary oil recovery is obtained by the addition of an alkali metal salt of certain reducing sulfur oxo acids as the sole stabilizing agent.

The present invention therefore entails a method of oil recovery from a subterranean petroleum-containing formation at elevated temperature penetrated by at least one injection well and by one production well in fluid communication with the formation, which comprises injecting into the formation a substantially oxygen-free aqueous saline solution of water-soluble polysaccharide biopolymer which has been treated in solution at a pH of at least about 5 by the addition of an effective amount of an alkali metal salt of a reducing sulfur oxo acid selected from sulfurous acid and thiosulfuric acid as the sole viscosity stabilizer. The polymer is preferably derived from a fermentation broth containing cells of an organism belonging to the genus Xanthomonas, while the alkali metal salt is preferably added in the amount of from about 100 to 5000 ppm, based on the solution being treated, especially as sodium sulfite/sodium bisulfite in the amount of from about 200 to 600 ppm, and the saline solution preferably is derived from a field brine having a dissolved salt content of at least about 10,000 ppm.

The present invention also entails a method of oil recovery from a subterranean petroleum-containing formation at elevated temperature penetrated by at least one injection well and by one production well in fluid communication with the formation, which comprises injecting into the formation a substantially oxygen-free aqueous saline solution at a pH of at least about 5 containing water-soluble polysaccharide biopolymer in the form of a fermentation broth treated at a pH of from about 5.5 to 7.5 with from about 100 to 5000 ppm, based on the broth, of an alkali metal salt of a reducing sulfur oxo acid selected from sulfurous acid and thiosulfuric acid. Preferably, the fermentation broth is produced by an organism belonging to the genus Xanthomonas, and the treatment is with from about 200 to 600 ppm sodium sulfite/sodium bisulfite.

The present invention further entails an aqueous polysaccharide biopolymer solution comprising a fermentation broth which has been treated at a pH of about 5.5 to 7.5 with from about 100 to 5000 ppm of an alkali metal salt of a reducing sulfur oxo acid selected from sulfurous acid and thiosulfuric acid, or a concentrate thereof. Preferably, the fermentation broth is produced by an organism belonging to the genus Xanthomonas, the biopolymer is at a concentration of from about 1 to 15 weight percent of the solution, and the treatment is with sodium sulfite/sodium bisulfite at a level of from about 200 to 600 ppm of the solution.

The above and other objects, features and advantages of the present invention will be appreciated from the following detailed description in conjunction with the accompanying drawings, in which

FIG. 1 is a graph showing the effect of sulfite/bisulfite addition on the viscosity stability at 90°C of polysaccharide biopolymer solutions prepared in sea water, the sulfite/bisulfite being added to the polysaccharide broth prior to dilution;

FIG. 2 is a graph showing the effect of sulfite/bisulfite addition on the viscosity stability at 90°C of polysaccharide biopolymer solutions prepared in sea water, the sulfite/bisulfite being added to a stable polysaccharide broth prior to dilution;

FIG. 3 is a graph showing the effect of sulfite/bisulfite addition on the viscosity stability at 105°C of polysaccharide biopolymer solutions prepared in sea water, the sulfite/bisulfite being added to the polysaccharide broth prior to dilution; and

FIG. 4 is a graph showing the effect of thiosulfate addition on the viscosity stability at 90°C of polysaccharide biopolymer solutions prepared in sea water.

Long-term viscosity stability is an extremely important requirement for mobility control polymers employed in tertiary oil recovery from high temperature (60-150°C) subterranean reservoirs. As reported in S.L. Wellington, Society of Petroleum Engineers Journal, December, 1983, page 909, commercially available xanthans may vary in thermal stability for reasons that are not completely understood. For present purposes, stable xanthans are defined as those which at a concentration of 750 ppm in deoxygenated synthetic sea water show a loss in viscosity, as measured at 25°C, of less than 5 percent over a period of 90 days at 90°C. The method of the present invention, which employs for mobility control a substantially oxygen-free aqueous saline solution of polysaccharide biopolymer which has been subjected to reduction treatment, provides this desired stability, little change in the viscosity of the solution occurring after months of use. The present method also provides reproducible manufacture of xanthans having reliable thermal stability.

The polysaccharide biopolymer employed in the method can be any water-soluble polysaccharide useful in polymer floods. Such biopolymers may include, for example, polysaccharides derived from the genus Sclerotium or related organisms and polysaccharides derived from the genus Alcaligenes or related organisms. Preferably, the biopolymer is xanthan, a polysaccharide derived from fermentation of carbohydrate by the bacteria of the genus Xanthomonas, especially the species Xanthomonas campestris. Suitable polysaccharide broth preparations include, for example, those disclosed in U.S. patents 3,301,848, 4,119,546 and 4,296,203, which are incorporated herein by reference. The polymer may be employed in the form of unreconstituted broth or may be reconstituted after isolation from the broth. Normally, the concentration of the polymer in the flood control solution is from about 100 to 2,000 ppm, preferably from about 300 to 1,500 ppm, by weight to provide a solution viscosity of from about 2 to 50 centipoises.

To produce the mobility control solution, the polysaccharide biopolymer is dissolved in aqueous saline solution at a pH of about 5 or greater. Normally this salinity, defined as the soluble salt or ion content present in a saline solution, expressed in milligrams total salt per kilogram brine solution, will be about 1,000 ppm or greater. The high temperature stability of the control solution improves with salinity, saline solutions derived from field brines which typically have a total dissolved salt content of 1 to 20 weight percent with a calcium and magnesium hardness of 1000 to 2500 ppm being especially effective. The pH of the saline polymer solution at the time of preparation should be about 5 or greater to prevent the deterioration of the stabilizing agent and the acid catalyzed hydrolysis of the polysaccharide, a pH of from about 7 to 8 being preferred.

While the mechanism of the stabilization process is not thoroughly understood, it is believed that the stability of the polysaccharide solution is provided by the inclusion of alkali metal sulfite/bisulfite or thiosulfate as the stabilizing agent at a level which results in reduction of oxidizing species in the polymer solution prior to exposure to high temperatures. This normally requires the addition of the stabilizing agent to the solution being treated in the amount of from about 100 to 5000 ppm, preferably 200 to 600 ppm, by weight of the solution, whereby undesirable oxidizing species or transition metals are apparently rapidly reduced. The oxidizing species is believed to be peroxy substances generated in the broth by air required in the aerobic processing of the broth in the presence of trace amounts of transition metals.

The stabilizer addition may occur either before or after the polymer addition to the saline solution. The treatment preferably is applied to the fermentation broth before dilution in field brine or other processing. The level of such addition to broth depends upon the subsequent treatment of the both prior to dilution with the saline solution. Thus, when the broth, which may have a polysaccharide content of about 1 weight percent or greater, typically 3 to 6 weight percent, is diluted directly following the treatment, the stabilizer is added at a level of about 100 to 1000 ppm, preferably 200 to 600 ppm. The addition is normally at a broth pH of from about 5.5 to 7.5, preferably about 6.8 to 7.2. The broth is allowed to stand for about one hour or more following dissolution of the stabilizer to effectively eliminate the oxidizing species present in the broth. The treated broth is then further treated with formaldehyde, at a level of at least about 3000 ppm, or other effective biocide to destroy living microorganisms present in the broth and to protect against microbial growth in storage or subsequent handling prior to dilution with the saline solution. If the broth treatment further includes a concentration step, such as by ultrafiltration, to provide a broth concentrate with a polysaccharide content of from about 12 to 15 weight percent, the stabilizer addition to the broth may be as high as about 5000 ppm. Such treated broth or concentrate may be handled with minimal oxygen exclusion prior to dilution of the broth with deoxygenated field brine or other saline solution before injection. In all cases, the stabilizer must be added prior to the biocide, which may react with and consume the stabilizer. Biocides should not be added until from about 1 to 5 hours, preferably about 4 hours, after stabilizer addition. After oxidizing species have been removed, biocide addition is not damaging to thermal stability of the biopolymer.

When the treatment is of the saline solution itself just prior to injection, the stabilizer is preferably added at a level of from about 100 to 400 ppm, especially 100 to 300 ppm of the sodium salt of the stabilizer. It is also necessary to have a low dissolved oxygen content in the saline solution, and this may be accomplished by use of separated recycled brine produced from the reservoir where anaerobic conditions exist or by addition of an oxygen scavenger. Natural gas or other cheap inert gas blankets maintain anaerobic conditions if the injection solution must be temporarily stored.

Any alkali metal sulfite/bisulfite or thiosulfate may be used, the term "alkali metal" as used herein being meant to include ammonium ion. Since sulfurous acid will exist in solution as the sulfite, the bisulfite, or a mixture of sulfite and bisulfite depending upon the pH of the solution, this stabilizing agent will normally be added as a mixture of alkali metal sulfite and alkali metal bisulfite. Of particular value is a 1:1 weight ratio of sodium sulfite/sodium bisulfite, which upon aqueous dissolution produces a pH of about 7, the approximate normal pH for polysaccharide fermentation broths. While the present stabilizing treatment will normally involve direct addition of the stabilizing agent, in situ formation of the agent may also be used. Thus, with sulfite/bisulfite treatment, for example, sulfur dioxide gas may be added to the broth or saline solution while maintaining the desired pH of the solution by the simultaneous addition of alkali metal base.

The stabilization process results in a substantially oxygen-free polymer control solution at the time of injection of the solution into the oil-bearing formation when the stabilizer is added to the dilute injection fluid in the oil field just prior to injection. When stable biopolymers are prepared during the manufacturing process by addition of the stabilizer to broth, oxygen-free dilution brine discussed hereinbefore must be used to prepare the injection solution. Substantially oxygen-free solution means a fluid dissolved oxygen content of 0.5 ppm or less when tested with the dissolved oxygen test kit supplied by Chemetrics, Inc., Warrenton, Virginia.

An initial increase in viscosity of xanthan solutions upon heating is common, having been noted previously, for example, in U.K. Patent Application GB 2000823A. This effect, referred to as viscosity build, is not well understood but is believed to arise from conformational changes in the polymer. In unstabilized systems, polymer degradation may occur faster than the viscosity build. The situation is complex since both temperature and salinity affect the kinetics of viscosity build and degradation. However, all xanthan broths do not exhibit viscosity build, and xanthan broths that do not exhibit viscosity build can still be stabilized.

Other components which are not viscosity stabilizers and which do not deleteriously affect the beneficial effect of the stabilizing agent on viscosity may also be incorporated into the mobility control solution. Such components might include, for example, biocides such as formaldehyde to prevent microbial deterioration of the polysaccharide biopolymer, as discussed hereinbefore, and chelating agents such as sodium citrate to sequester polyvalent ions such as iron.

The following examples are merely illustrative and are not to be construed as limiting the invention, the scope of which is defined by the appended claims.

## Example 1

To a fresh 5.4 weight percent xanthan fermentation broth (1) at pH 7.0 was added with agitation 250 ppm of a 1:1 sodium sulfite[2]/sodium bisulfite[2] mixture as a 20 weight percent aqueous solution. The treated

broth was allowed to stand 4 hours at room temperature and was further treated with 3000 ppm formaldehyde as a 37 weight percent aqueous solution[3] to kill the live microbial cells in the broth. The treated broth was then diluted with stirring to a xanthan concentration of 750 ppm with synthetic sea water[ ].

A 34-ml aliquot of the diluted broth was transferred by syringe to a nitrogen-flushed glass ampule. The filled ampule was vacuum degassed three times by the freeze/thaw technique, then sealed with a torch and allowed to stand at room temperature (25°C) overnight, the size of the ampule being such that about 1 ml of gas space remained after sealing. A series of ampules prepared in this manner was placed in an oil bath at 90°C. Periodically, an ampule was removed from the bath and the viscosity of the polymer solution in the ampule was determined at 25°C using a Brookfield viscometer with UL adapter, 6 RPM.

A second series of ampules containing no sodium sulfite/bisulfite was prepared and tested as a control.

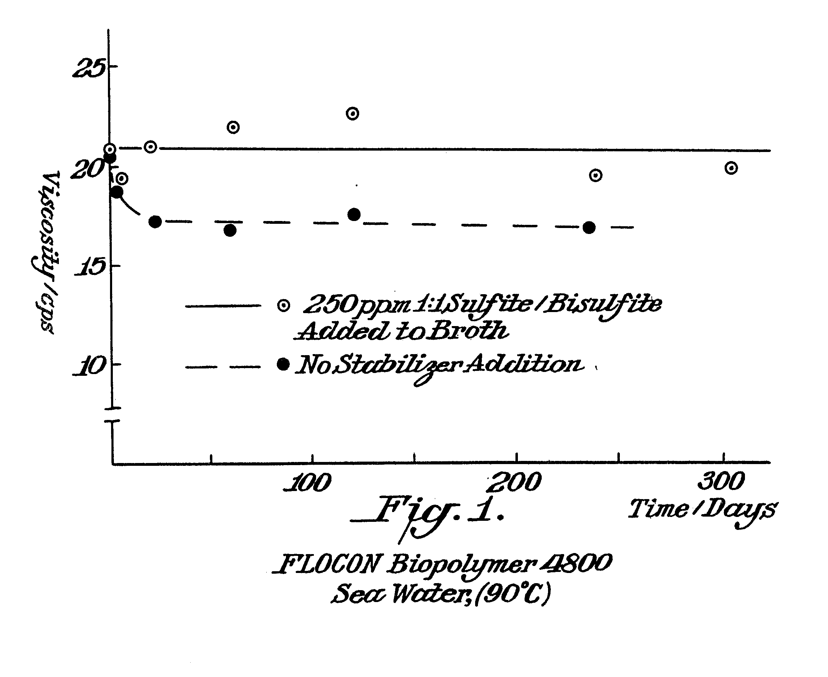

Results of the testing are shown in FIG. 1.

Similar results are obtained when the broth is treated with 1:1 sodium sulfite/sodium bisulfite at levels of 100 ppm and 1000 ppm.

(1)  FLOCON Biopolymer 4800, Pfizer Inc., New York, New York

(2)  Baker Analyzed Reagent, J.T. Baker Chemical Company, Phillipsburg, New Jersey

(3)  Reagent Grade, Mallinckrodt Inc., Paris, Kentucky

(4)  NaCl 23.89 g, $MgCl.6H_2O$ 10.76 g, $CaCl_2$ 1.241 g, $Na_2SO_4$ 4.288 g, $NaHCO_3$ 0.205 g to 1000 g with deionized water

## Example 2

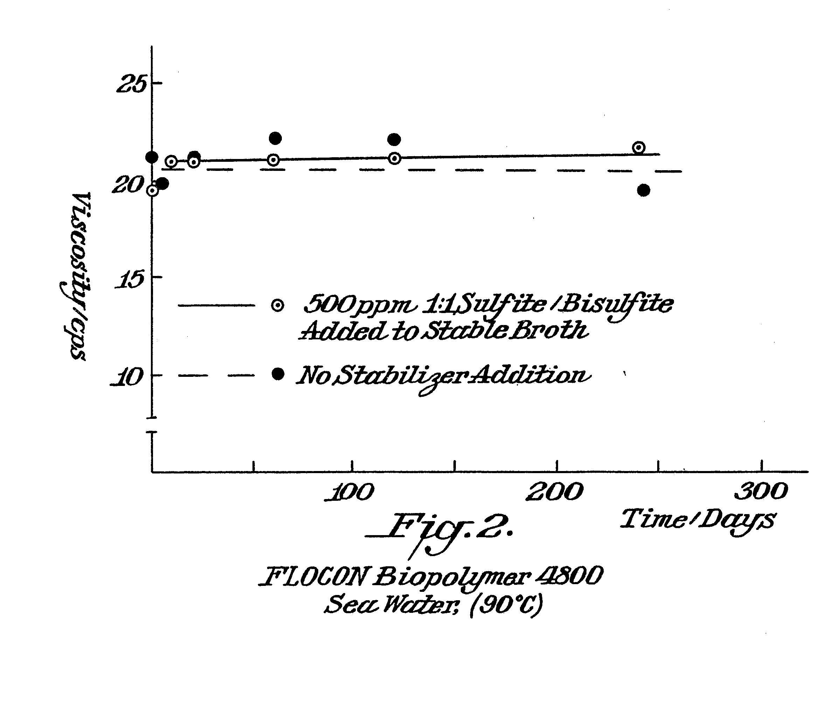

The procedure of Example 1 was repeated with the exception that a stable 5.6 weight percent xanthan broth was treated with 500 ppm 1:1 sodium sulfite/sodium bisulfite. Results of the testing are shown in FIG. 2.

## Example 3

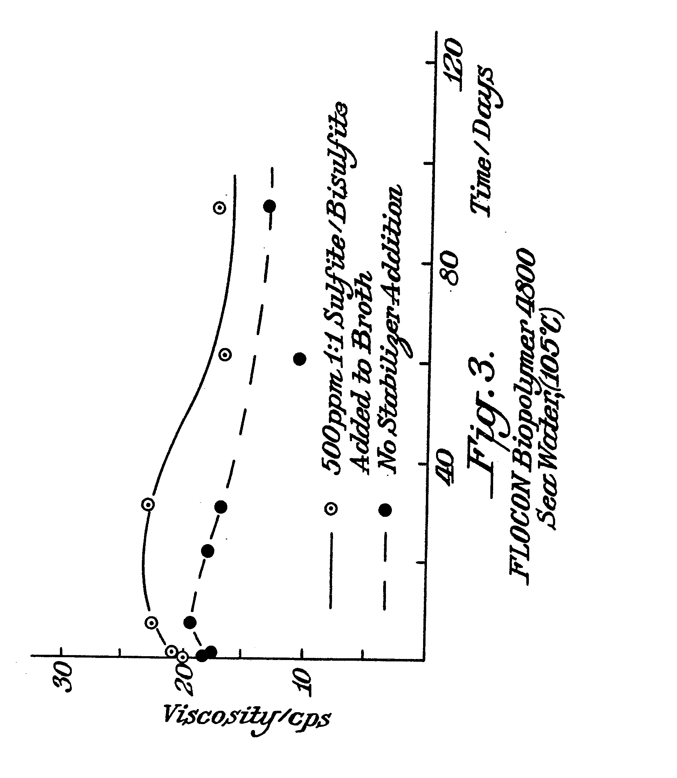

The procedure of Example 1 was repeated with the exceptions that a 5.5 weight percent xanthan broth was treated with 500 ppm 1:1 sodium sulfite/sodium bisulfite, and the ampules were held in an oil bath at 105°C. Results of the testing are shown in FIG. 3.

## Example 4

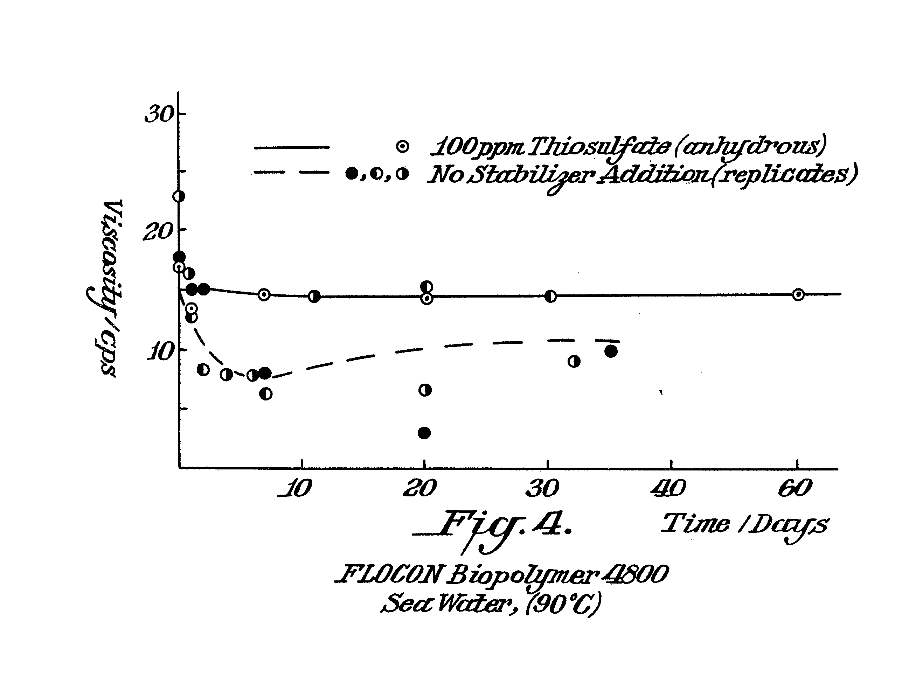

The treatment and testing of Example 1 were repeated with the exception that the stabilizing agent was sodium thiosulfate[1] at 100 ppm. Results of the testing are shown in FIG. 4.

(1) Baker Analyzed Reagent.

PC 6570A


CLAIMS


1.   A method of oil recovery from a subterranean petroleum-containing formation at elevated temperature penetrated by at least one injection well and by one production well in fluid communication with the formation, which comprises injecting into said formation a substantially oxygen-free aqueous saline solution of water-soluble polysaccharide biopolymer which has been treated in solution at a pH of at least about 5 by the addition of an effective amount of an alkali metal salt of a reducing sulfur oxo acid selected from sulfurous acid and thiosulfuric acid as sole viscosity stabilizer.

2.   The method of claim 1 wherein said biopolymer is derived from a fermentation broth containing cells of an organism belonging to the genus Xanthomonas.

3.   The method of claim 2 wherein said alkali metal salt addition is from about 100 to 5000 ppm, based on said solution being treated.

4.   The method of claim 3 wherein said alkali metal salt addition is from about 200 to 600 ppm sodium sulfite/sodium bisulfite.

5.   The method of claim 2 wherein said saline solution is derived from a field brine having a dissolved salt content of at least about 10,000 ppm.

6.   A method of oil recovery from a subterranean petroleum-containing formation at elevated temperature penetrated by at least one injection well and by one production well in fluid communication with the formation, which comprises injecting into said formation a substantially oxygen-free aqueous saline solution at a pH of at least about 5 containing water-soluble polysaccharide biopolymer in the form of a fermentation broth treated at a pH of from about 5.5 to 7.5 with from about 100 to 5000 ppm, based on said broth, of an alkali metal salt of a reducing sulfur oxo acid selected from sulfurous acid and thiosulfuric acid.

7. The method of claim 6 wherein said fermentation broth is produced by an organism belonging to the genus Xanthomonas.

8. The method of claim 7 wherein said treatment is with from about 200 to 600 ppm sodium sulfite/sodium bisulfite.

9. An aqueous polysaccharide biopolymer solution comprising a fermentation broth which has been treated at a pH of about 5.5 to 7.5 with from about 100 to 5000 ppm of an alkali metal salt of a reducing sulfur oxo acid selected from sulfurous acid and thiosulfuric acid, or a concentrate thereof.

10. The biopolymer solution of claim 9 wherein said fermentation broth is produced by an organism belonging to the genus Xanthomonas, said biopolymer is at a concentration of from about 1 to 15 weight percent of said solution, and said treatment is with sodium sulfite/sodium bisulfite at a level of from about 200 to 600 ppm of said solution.

Fig. 1.

FLOCON Biopolymer 4800
Sea Water, (90°C)

Fig. 2.

FLOCON Biopolymer 4800
Sea Water, (90°C)

Legend:
— ⊙ — 500 ppm 1:1 Sulfite/Bisulfite Added to Stable Broth
— ● — No Stabilizer Addition

Y-axis: Viscosity/cps
X-axis: Time/Days

**Fig.3.**

FLOCON Biopolymer 4800
Sea Water (105°C)

*Fig.4.*

FLOCON Biopolymer 4800
Sea Water, (90°C)